# EUROPÄISCHE PATENTSCHRIFT

(11) **EP 0 392 387 B1**
(45) Veröffentlichungstag und Bekanntmachung des Hinweises auf die Patenterteilung: **12.10.1994**
(21) Anmeldenummer: 90106635.7
(22) Anmeldetag: 06.04.1990
(51) Int. Cl.: G02B 5/10

(54) **Spiegel zur Veränderung der geometrischen Gestalt eines Lichtbündels**
Mirror for changing the geometric shape of a light beam
Miroir pour changer la forme géométrique d'un rayon lumineux

(30) Priorität: 14.04.1989 DE 3912237
(43) Veröffentlichungstag der Anmeldung: 17.10.1990
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Hohberg, Gerhard, Dr., D-7080 Aalen-Dewangen (DE)

(56) Entgegenhaltungen:
- EP-A- 0 080 597
- GB-A- 2 062 282
- JP-A-59 151 101
- PATENT ABSTRACTS OF JAPAN, Band 12, Nr. 310 (E-648)[3157], 23. August 1988;& JP-A-63 077 178

## Beschreibung

Die Erfindung betrifft einen Spiegel zur Veränderung der geometrischen Gestalt eines Lichtbündels mit mehreren spiegelnden Bereichen nach dem Oberbegriff des Anspruchs 1 sowie die Verwendung eines Spiegels nach Anspruch 7.

Spiegel zur Veränderung der geometrischen Gestalt eines Lichtbündels sind weit verbreitet. Schwierig ist die Erzeugung eines Strahlungsquerschnittes, welcher eine im wesentlichen rechteckigen bis linienförmigen Querschnitt aufweist, innerhalb dessen die Intensität einen konstanten Wert hat. Solche Strahlungsquerschnitte werden insbesondere zur Oberflächenbehandlung mit Lasern benötigt, um nur ein wesentliches Anwendungsgebiet zu nennen.

Bei der Oberflächenbehandlung von Werkstücken mit Lasern ist es für die meisten Anwendungen wichtig, daß jeder Punkt der Werkstuckoberfläche mit der gleichen Gesamtenergie beaufschlagt wird. Deshalb wird z.B. das Werkstück streifenweise mit dem annähernd punktförmig fokussierten Laserstrahl abgerastert, da die meisten in der Praxis verwendeten Laser einen Strahl liefern, dessen Querschnitt nicht rechteckig oder linienhaft und dessen Intensitätsverteilung nicht gleichförmig ist.

Bei der Abrasterung mit punktförmigen Laserstrahlquerschnitten umgeht man optische Anordnungen, die einen beliebigen Strahlquerschnitt geeignet umformen können. Der Vorteil der Anordnungen mit Strahlenquerschnittsveränderung besteht insbesondere in einer Erhöhung der Bearbeitungsgeschwindigkeit.

Die umformende Optik sorgt dafür, daß der Laserstrahl beim Auftreffen auf das Werkstück einen im wesentlichen rechteckigen bis linienförmigen Querschnitt aufweist, innerhalb dessen die Intensität einen fast konstanten Wert hat. Wird ein Strahl mit derartigem Querschnitt mit konstanter Geschwindigkeit und parallel zu einem Kantenpaar des Rechtecks über die Werkstückoberfläche geführt, dann ist das Energieprofil innerhalb des bestrahlten Streifens gleichförmig.

Die meisten in der Praxis verwendeten Laser liefern einen Strahl, dessen Querschnitt nicht rechteckig und dessen Intensitätsverteilung nicht gleichförmig ist. Deshalb werden optische Anordnungen gebraucht, die einen beliebigen Strahlquerschnitt geeignet umformen können. Facettenspiegel und Integratoren sind zwei Typen von umformenden Optiken, welche für die Erzeugung von linienhaften Geometrien hinsichtlich der Intensitätsverteilung von Laserstrahlen bevorzugt eingesetzt werden.

Facettenspiegel (siehe bspw. JP-A-63-77 178) bestehen aus einer Vielzahl von rechteckigen Planspiegeln, von denen jeder aus dem Bündel einen rechteckigen Teil der gewünschten Größe ausblendet und reflektiert. Die Planspiegel sind dabei so gegeneinander geneigt, daß in einem gewissen Abstand die einzelnen linienhaften Teilstrahlen sich überdecken. Somit erfüllt ein Facettenspiegel die Forderungen hinsichtlich Geometrie und Homogenität der Intensitätsverteilung; seine Herstellung ist aber sehr aufwendig, so daß er keinen verbreiteten Einsatz gefunden hat.

Aus JP-A-59-151 101 ist weiterhin ein aus spiegelnden Segmenten aufgebauter Spiegel bekannt, bei dem ein Parabolspiegel zum Fokussieren eines parallelen Lichtbündels auf einen Punkt auf der Symmetrieachse (Brennpunkt) näherungsweise durch eine Aneinanderreichung von Kugelsegmenten dargestellt wird, deren Zentren auf der Symmetrieachse des Paraboloids liegen und deren spiegelnden Flächen das Soll-Paraboloid jeweils auf einer Umfangslinie tangieren.

Integratoren bestehen aus Wellenleitern mit mindestens vier planen Spiegeln, die zu einem Hohlleiter mit rechteckigem Querschnitt zusammengefügt sind. Ihre Fertigung ist problemlos. Sie haben aber den Nachteil, daß die Strahlung teilweise vielfach reflektiert wird und dadurch erhöhte Verluste auftreten. Außerdem liegt die Ebene günstigster Intensitätsverteilung am Ende des Hohlleiters und ist somit nicht frei zugänglich. Dies ist nur durch eine nochmalige Abbildung behebbar, welche zu weiteren Intensitätsverlusten führt.

Aufgabe der Erfindung ist es, bei verbesserter Produktionstechnik einen Segmentspiegel zu schaffen, mit dem bei nur einer optischen Abbildung einem Lichtbündel mit beliebigem Strahlquerschnitt ein möglichst linienhaften Strahlquerschnitt gegeben wird, innerhalb dessen die Intensität homogen ist.

Diese Aufgabe wird erfindungsgemäß durch die kennzeichnenden Merkmale des ersten Patentanspruches gelöst.

Der besondere Vorteil dieses Spiegels besteht darin, daß das Lichtbündel in mehrere linienhafte Bereiche zerlegt wird, welche übereinandergelegt auf eine Linie gelenkt werden, wobei hierzu nur eine einzige Spiegelung jedes Lichtstrahlsegmentes erfolgt. Diese optische Umformung der Strahlgeometrie kann eine hervorragende Homogenität der Intensitätsverteilung liefern, welche durch die Anzahl der Spiegelsegmente beeinflußbar ist, bei minimalen Energieverlusten bei der optischen Abbildung.

Es ergibt sich außerdem als weiterer Vorteil, daß bei derartigen Spiegeln die Zahl und damit die Länge der Segmente einerseits und die Länge der Fokuslinie andererseits unabhängig voneinander gewählt werden können.

Um eine feste Relation zwischen den einzelnen Spiegelsegmenten zu erhalten, können die Segmente zu einem kompakten Bauteil zusammengefügt sein, wobei es vorteilhaft ist, wenn alle Segmente lückenlos aneinandergefügt sind. Im Idealfall ist der Spiegel mit seinen mehreren streifenförmigen Segmenten aus einem Teil gefertigt.

Zur Erzeugung der linienhaften Abbildung verwendet man zu einer Achse rotationssymmetrische Segmente, wobei diejenigen Lichtbündel, welche von einem Achspunkt ausgehen, von den Segmenten so reflektiert werden, daß sie die Achse wieder schneiden. Dabei werden dann alle von den Segmenten reflektierten Lichtbündel auf ein und denselben Teilbereich der Rotationsachse abgebildet.

Bei der Auslegung der Spiegelsegmente muß man gewisse fertigungstechnische Einschränkungen berücksichtigen, wenn man keine Intensitätsverluste an den Kontaktlinien zwischen den einzelnen Segmenten hinnehmen will. Insbesondere bei dem Bau des Spiegels aus einem Teil muß man berücksichtigen, daß die Herstellung von spitzen Vertiefungen große Probleme bereitet. Es ist deshalb vorteilhaft, wenn an den Kontaktlinien zwischen den einzelnen Segmenten kein Winkel kleiner als 180° vorhanden ist. Dies ist insbesondere dann der Fall, wenn die Segmente im Querschnitt alle eine konkave oder eine konkav-konvexe Kontur aufweisen.

Spiegel der vorab beschriebenen Art lassen sich insbesondere sehr vorteilhaft bei der Oberflächenbehandlung von Werkstücken mit streifenweiser Bestrahlung durch einen Laser verwenden.

Die Erfindung wird nachstehend in beispielhafter Weise anhand der Figuren näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigt
- Fig. 1: einen dreidimensionalen Blick auf einen erfindungsgemäßen Spiegel mit rotationssymmetrischen Flächen;
- Fig. 1a: das Bild des gespiegelten Lichtbündels aus Fig. 1
- Fig. 1b: die Segmentierung des Lichtbündels aus Fig. 1
- Fig. 2: einen Querschnitt durch einen erfindungsgemäßen Spiegel mit konischen Segmenten und parellelem Lichteinfall;
- Fig. 3: einen Querschnitt durch einen erfindungsgemäßen Spiegel mit konkaven und konvexen Segmenten und parallelem Lichteinfall;
- Fig. 4: einen Querschnitt durch einen erfindungsgemäßen Spiegel mit konkaven Segmenten und parallelem Lichteinfall;
- Fig. 5: einen Querschnitt durch einen erfindungsgemäßen Spiegel mit konvexen Segmenten und parallelem Lichteinfall;
- Fig. 6: einen Querschnitt durch einen erfindungsgemäßen Spiegel mit konischen Segmenten und divergentem Lichteinfall;

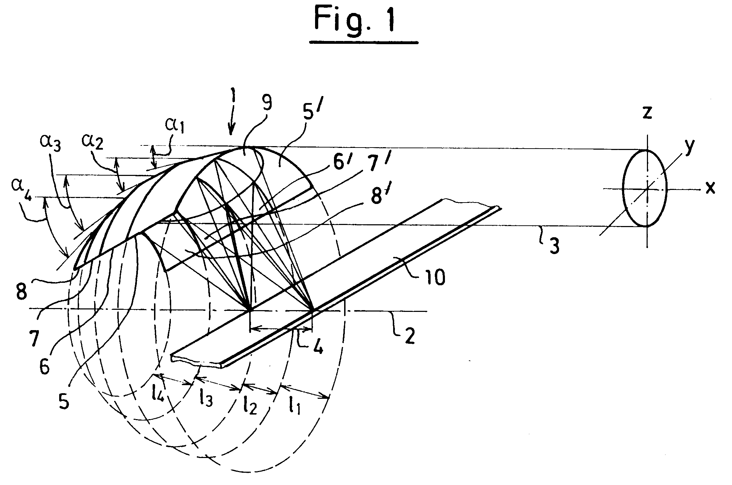

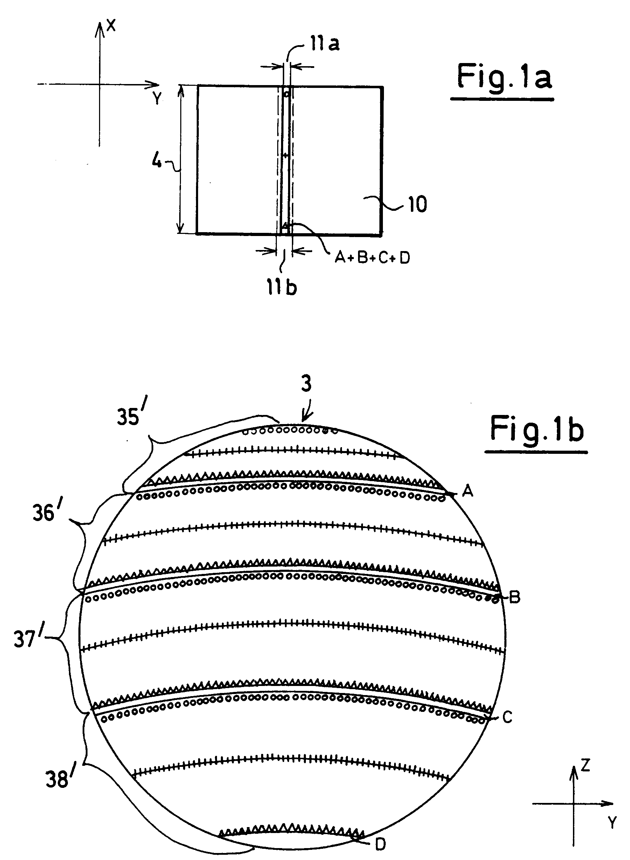

Der in Fig. 1 dargestellte Spiegel (1) bildet ein zur Symmetrieachse (2) des Spiegels (1) achsparalleles Laserbündel (3) in einen linienförmigen Arbeitsbereich (4) auf der Symmetrieachse (2) des Spiegels (1) ab. Dabei wird von der Grunderkenntnis ausgegangen, daß es bei der Oberflächenbehandlung von Werkstücken mit Lasern bei den meisten Anwendungen nicht auf das Seitenverhältnis eines Rechtecks als Arbeitsbereich (4) ankommt. Insbesondere darf die Breite des Rechtecks in Richtung der vorgesehenen Abtastbewegung klein sein, so daß man eine annähernd linienförmige, aber gleichförmige Verteilung der Intensität im Arbeitsbereich (4) erhält. Der Spiegel (1) ist aus vier Segmenten (5,6,7,8) aufgebaut. Jedes Segment (5,6,7,8) ist ein Teil eines Konus mit Innenverspiegelung. Die Größe des Spiegels (1) muß dabei auf die Größe des Strahldurchmessers des Laserstrahlbündels (3) abgestimmt sein, damit das Laserstrahlbündel (3) auf alle Segmente (5,6,7,8) des Spiegels (1) fällt. Durch die Größe des Arbeitsbereiches (4) sind die Einstellwinkel αᵢ der konischen Segmente (5,6,7,8) sowie deren Ausdehnung in Richtung der Symmetrieachse (2) festgelegt.

An das erste Segment (5) des Spiegels (1) mit dem Einstellwinkel α₁ schließt sich ein zweites Segment (6) schlüssig an. Das Segment (6) hat einen anderen Einstellwinkel α₂ als das erste Segment (5), da es den Teil des Laserstrahlbündels (3), welcher auf ihn fällt, um die Längenausdehnung l₁ des ersten Segments (5) in Richtung der Symmetrieachse (2) nach vorne spiegeln muß. Durch den anderen Einstellwinkel α₂ muß auch die Längenausdehnung l₂ des zweiten Semgentes (6) in Richtung der Symmetrieachse (2) eine andere sein. Sie muß so gewählt werden, daß der Arbeitsbereich (4) wieder voll ausgeleuchtet wird. Entsprechend geht man bei der Bestimmung der Einstellwinkel α₃, α₄ und der Längenausdehnungen l₃, l₄ der beiden weiteren Segmente (7,8) vor. Dieser Aufbau des Spiegels (1) geht dabei von der Grunderkenntnis aus, daß von einem optischen Spiegel (1) der rotationssymmetrisch zu einer Achse (2) ist aber ansonsten eine beliebige Kontur aufweist, alle Strahlen von einem Punkt auf der Symmetrieachse (2) nach der Reflexion an dem Spiegel (1) wieder auf diese Achse (2) treffen.

Das Laserstrahlbündel (3), welches in der Figur 1 parallel zur x-Achse eingestrahlt wird, beleuchtet die verspiegelten Innenflächen (5', 6', 7', 8') der einzelnen Segmente (5,6,7,8) Das Bezugszeichen (9) bezeichnet den vom Laserstrahl (3) ausgeleuchteten Bereich des Spiegels, wobei der Rand des Bereiches durch die gekrümmte Linie dargestellt ist. Die verspiegelten Innenflächen (5',6',7',8') bilden das Laserstrahlbündel (3) dann abschnittsweise auf die Symmetrieachse (2) der konischen Spiegelsegmente (5,6,7,8) ab, und zwar in den gewünschten Arbeitsbereich (4) auf der Oberfläche des zu bestrahlenden Werkstückes (10). Aus der Sicht eines Herstellers eines derartigen rotationssymmetrischen Spiegels (1) ist der Umstand, daß derartige Spiegel (1) mit modernen numerisch gesteuerten Maschinen hochgenau und kostengünstig hergestellt werden können, besonders vorteilhaft. Je nach dem, ob sich die Oberfläche des Werkstücks (10) in einer Ebene mit der Symmetrieachse (2) des Spiegels (1) befindet oder aber darunter bzw. darüber liegt, verteilt sich die durch den Spiegel (1) abgebildete Energie des Laserstrahlbündels (3) in einem engeren (11a) oder breiteren (11b) Bereich auf der Oberfläche des zu bestrahlenden Werkstücks (10), wie dies in Fig. 1a gezeigt ist.

In dieser Fig. 1a sind drei diskrete Punkte im Arbeitsbereich (4) jeweils mit einem Kreis, einem Kreuz und einem Dreieck gekennzeichnet. Fig. 1b zeigt nun, welche Teile des Laserstrahlbündels (3) von den verspiegelten Innenflächen (5′,6′,7′,8′) der Segmente (5,6,7,8) des Spiegels (1) in welchen Punkt (Kreis, Kreuz, Dreieck) im Arbeitsbereich (4) auf der Symmetrieachse (2) gelenkt werden. Dabei sind auch die einzelnen Bereiche (35′,36′,37′,38′) des Laserstrahlbündels (3) eingezeichnet, welche von den einzelnen Segmenten (5,6,7,8) des Spiegels (3) auf die Symmetrieachse (2) gelenkt werden. Der Bereich 38′ des Laserstrahlbündels (3) wird dabei von der verspiegelten Innenfläche 8′ des Segmentes 8 abgebildet. Für die anderen Berich gilt entsprechendes.

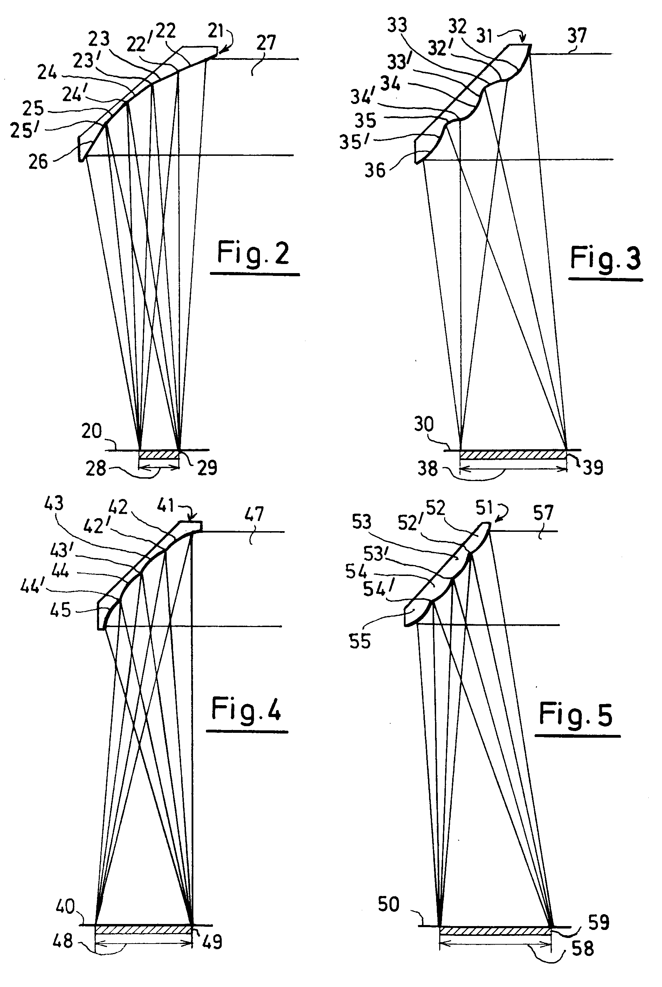

In den Fig. 2-5 sind diverse Ausführungsformen mit unterschiedlichen Konturen der verspiegelten Innenfläche von Spiegeln (21,31,41,51) im Querschnitt gezeigt, welche ein achsparalleles Laserbündel (27,37,47,57) auf die Oberfläche eines Werkstückes (29,39,49,59) linienhaft auf die Symmetrieachse (20,30,40,50) in den Arbeitsbereich (28,38,48,58) abbilden.

Alle Spiegel (21,31,41,51) sind aus verschiedenen Segmenten (22,23,24,25,26; 32,33,34,35,36; 42,43,44,45; 52,53,54,55) aufgebaut. Sie sind zum Teil aus einem Stück gefertigt (31,41) oder aus mehreren Teilstücken zusammengesetzt (21,51). Der Zusammenbau eines Spiegels (21,51) aus mehreren diskreten Segmenten (22,23,24,25,26; 52,53,54,55) ist immer dann sinnvoll, wenn die Geometrie der verspiegelten Innenoberflächen der Segmente (22,23,24,25; 52,53,54,55) an den Übergängen von einem Segment (22,23,24,25,26; 52,53,54,55) zu einem anderen Segment (22,23,24,25,26; 52,53,54,55) zu einer verrundeten Kante (22′,23′,24′,25′;52′,53′,54′) führt und man die Störung der Strahlungen an besagten Kanten (22',23',24',25'; 52',53',54') gering halten möchte. Dieses Problem ist insbesondere immer dann gegeben, wenn die verspiegelten Innenoberflächen der Segmente (22,23,24,25,26; 52,53,54,55) nur aus im Querschnitt ebenen (22,23,24,25,26) oder konvexen Segmenten (52,53,54,55) bestehen.

Dagegen kann man die Segmente (32,33,34,35,36; 42,43,44,45) der Spiegel (31,41) immer dann problemlos aus einem Stück herausarbeiten, wenn die Übergänge bzw. Kanten (32',33',34',35'; 42 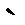 ,43',44') plan (Fig. 3) oder spitz (Fig. 4) verlaufen. Da diese beiden Spiegel (31,41) fertigungstechnisch exakt herstellbare Übergänge (32',33',34',35') und Kanten (42',43',44') besitzen, treten keine Verluste der Laserenergie in diesen Kanten (32',33',34',35'; 42',43',44') auf. Die Gründe hierfür liegen bei der Fertigungstechnik, denn die benötigten Drehwerkzeuge für die Herstellung (z.B. Einzeldiamanten) eines erfindungsgemäßen Spiegels haben immer verrundete Schneidkanten. Deshalb können spitze Vertiefungen, wie sie insbesondere in Fig. 2 und Fig.5 an den Anschlußstellen zwischen den verschiedenen Segmenten auftreten, nur unvollkommen realisiert werden. Die in Fig. 4 auftretenden, hervorstehenden Spitzen sind hingegen auch mit verrundetem Werkzeug exakt zu fertigen.

Bei den Segmenten der Spiegel mit gekrümmten verspiegelten Innenoberflächen (Fig. 3,4 und 5) hat man den Vorteil, daß man die Zahl (und damit die Länge) der Segmente einerseits und die Länge der Fokuslinie (≙ Arbeitsbereich) andererseits unabhängig voneinander wählen kann.

Entsprechend der gewünschten Anwendungen und den gestellten Anforderungen an die Homogenität der Intensitätsverteilung haben die Segmente in Fig. 2-5 in Richtung der Symmetrieachse einen im wesentlichen kreis-, parabel- oder elliptischen Querschnitt.

Bei entsprechender Berechnung des Spiegels kann dabei der Einfallswinkel des Laserstrahlbündels (27,37,47,57) sowie dessen geometrische Eigenschaften in einem weiten Bereich variieren.

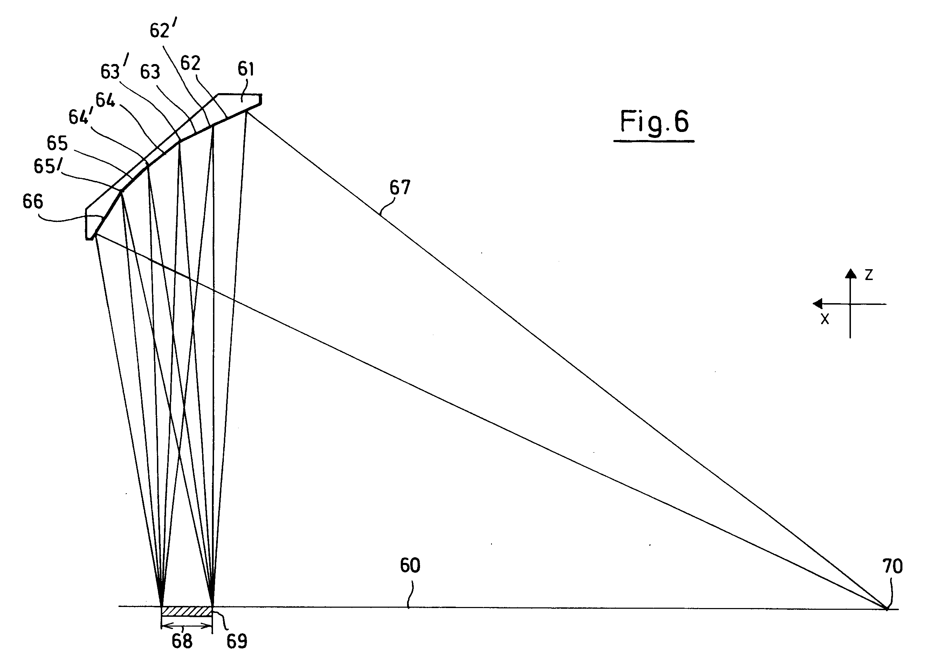

In Fig. 6 ist die Verwendung eines Spiegels (61) zur Bestrahlung der Oberfläche eines Werkstückes (69) in einem linienhaften Arbeitsbereich (68) auf der Symmetrieachse (60) des Spiegels (61) gezeigt. Das Lichtbündel (67) ist dabei weder parallel noch achsparallel zur Symmetrieachse (60), sondern divergent mit einem Quellpunkt (70) auf der Symmetrieachse (60) (d.h. Rotationsachse), wird also durch die fünf Segmente (62-66) des Spiegels auf den linienhaften Arbeitsbereich (68) abgebildet, wobei an den Verbindungslinien der Segmente (62′- 65′) jeweils ein Sprung der Abbildung vom Ende des Arbeitsbereiches (68) an dessen Anfang erfolgt. Der Arbeitsbereich (68) ist dabei ein Intervall auf der Symmetrieachse (60). Neigungen und Längen der Segmente (62-66) werden so gewählt, daß die zugehörigen Fokallinien auf der Symmetrieachse (60) gleich lang sind und die gleiche Lage haben. Die geeigneten Abmessungen lassen sich mit bekannten numerischen Rechenverfahren leicht berechnen.

## Patentansprüche

1. Spiegel zur Veränderung der geometrischen Gestalt eines Lichtbündels mit mehreren spiegelnden Bereichen, dadurch gekennzeichnet, daß der Spiegel (1; 21; 31; 41; 51; 61) aus mehreren Segmenten (5-8; 22-26; 32-36; 42-45; 52-55; 62-66) von Oberflächen von nicht sphärischen Rotationskörpern mit einer gemeinsamen Rotationsachse (2; 20; 30; 40; 50; 60) aufgebaut ist, deren Größe in Abhängigkeit des umzuformenden parallelen Lichtbündels so gewählt ist, daß das umzuformende Lichtbündel (3; 27; 37; 47; 57; 67) gleichzeitig auf mehrere der Segmente (5-8; 22-26; 32-36; 42-45; 52-55; 62-66) fällt und alle Segmente (5-8; 22-26; 32-36; 42-45; 52-55; 62-66) so geformt und ausgerichtet sind, daß alle Segmente (5-8; 22-26; 32-36; 42-45; 52-55; 62-66) die reflektierten Bereiche des Lichtbündels auf denselben linienförmigen Fokus (4; 28; 38; 48; 58; 68) auf der Rotationsachse (2; 20; 30; 40; 50; 60) lenken.

2. Spiegel nach Anspruch 1, dadurch gekennzeichnet, daß alle Segmente (5-8; 22-26; 32-36; 42-45; 52-55; 62-66) zu einem kompakten Bauteil zusammengefügt sind.

3. Spiegel nach einem der Ansprüche 1 oder 3, dadurch gekennzeichnet, daß alle Segmente (5-8; 22-26; 32-36; 42-45; 52-55; 62-66) lückenlos aneinandergefügt sind.

4. Spiegel nach einem der Ansprüche 1-3, dadurch gekennzeichnet, daß der Spiegel (1; 21; 31; 41; 51; 61) mit mehreren Segmenten (5-8; 22-26; 32-36; 42-45; 52-55; 62-66) aus einem Teil durch Drehen gefertigt ist.

5. Spiegel nach einem der Ansprüche 1-4, dadurch gekennzeichnet, daß an den Kontaktlinien (32'-35'; 42'-44') zwischen den einzelnen Segmenten (32-36; 42-45) kein Winkel kleiner als 180° vorhanden ist.

6. Spiegel nach einem der Ansprüche 1-5, dadurch gekennzeichnet, daß im Querschnitt der Spiegel (31) eine konkav-konvexe Kontur aufweist.

7. Verwendung eines Spiegels nach einem der Ansprüche 1-6 zur Oberflächenbehandlung mit streifenweiser Bestrahlung durch einen Laser.

## Claims

1. Mirror for changing the geometric form of a light beam having a plurality of reflecting zones,
characterized in that
the mirror (1; 21; 31; 41; 51; 61) is constituted by a plurality of segments (5-8; 22-26; 32-36; 42-45; 52-55; 62-66) of surfaces of non-spherical rotational bodies having a collective rotational axis (2; 20; 30; 40; 50; 60), said segments having respective sizes selected in accordance with the parallel beam to be transformed so as to cause the light bundle to be transformed (3; 27; 37; 47; 57; 67) to impinge simultaneously onto a plurality of the segments (5-8; 22-26; 32-36; 42-45; 52-55; 62-66), and said segments (5-8; 22-26; 32-36; 42-45; 52-55; 62-66) being formed and aligned so as to cause all segments (5-8;22-26; 32-36; 42-45; 52-55; 62-66) to direct the reflected parts of the light beam to the same line-shaped focus (4; 28; 38; 48; 58; 68) on the rotational axis (2; 20; 30; 40; 50; 60).

2. Mirror according to claim 1, characterized in that all segments (5-8; 22-26; 32-36; 42-45; 52-55; 62-66) are joined together into a compact component.

3. Mirror according to one of the claims 1 or 2, characterized in that all segments (5-8; 22-26; 32-36; 42-45; 52-55; 62-66) are joined without gaps.

4. Mirror according to one of the claims 1-3, characterized in that the mirror (1; 21; 31; 41; 51; 61;) with a plurality of segments (5-8; 22-26; 32-36; 42-45; 52-55; 62-66) is produced from a single part on a lathe.

5. Mirror according to one of the claims 1-4, characterized in that no angle less than 180° is apparent at the contact lines (32'-35'; 42'-44') between the single segments (32-36; 42-45).

6. Mirror according to one of the claims 1-5, characterized in that the mirror (31) has a concave contour when viewed in cross section.

7. Use of a mirror according to one of claims 1-6 for the surface treatment with stripwise laser illumination.

## Revendications

1. Miroir destiné à modifier la configuration géométrique d'un faisceau lumineux, comprenant plusieurs régions réfléchissantes, caractérisé en ce que le miroir (1 ; 21 ; 31 ; 41 ; 51 ; 61) formé de plusieurs segments (5-8 ; 22-26 ; 32-36 ; 42-45 ; 52-55 ; 62-66), est composé de surfaces de corps de révolution non sphériques ayant un axe de révolution commun (2 ; 20 ; 30 ; 40 ; 50 ; 60), dont la dimension est choisie en fonction du faisceau de lumière parallèle à transformer, de manière que le faisceau lumineux (3 ; 27 ; 37 ; 47 ; 57 ; 67) à transformer tombe simultanément sur plusieurs des segments (5-8 ; 22-26 ; 32-36 ; 42-45 ; 52-55 ; 62-66) et tous les segments (5-8 ; 22-26 ; 32-36 ; 42-45 ; 52-55 ; 62-66) sont conformés et orientés de manière que tous les segments (5-8 ; 22-26 ; 32-36 ; 42-45 ; 52-55 ; 62-66) renvoient les régions réfléchies du faisceau lumineux sur le même foyer linéaire (4 ; 28 ; 38 ; 48 ; 58 ; 68) situé sur l'axe de révolution (2 ; 20 ; 30 ; 40 ; 50 ; 60).

2. Miroir selon la revendication 1, caractérisé en ce que tous les segments (5-8 ; 22-26 ; 32-36 ; 42-45 ; 52-55 ; 62-66) sont assemblés en un élément compact.

3. Miroir selon une des revendications 1 et 2, caractérisé en ce que tous les segments (5-8 ; 22-26 ; 32-36 ; 42-45 ; 52-55 ; 62-66) sont juxtaposés sans solution de continuité.

4. Miroir selon une des revendications 1 à 3, caractérisé en ce que le miroir (1 ; 21 ; 31 ; 41 ; 51 ; 61) formé de plusieurs segments (5-8 ; 22-26 ; 32-36 ; 42-45 ; 52-55 ; 62-66) est fabriqué en une seule pièce par tournage.

5. Miroir selon une des revendications 1 à 4, caractérisé en ce qu'il n'y a pas d'angle inférieur à 180° sur les lignes de contact (32'-35' ; 42'-44') entre les segments individuels (32-36 ; 42-45).

6. Miroir selon une des revendications 1 à 5, caractérisé en ce qu'en coupe, le miroir (31) présente un profil concave-convexe.

7. Emploi d'un miroir selon une des revendications 1 à 6 pour le traitement de surface au laser avec irradiation en bandes.
